# EUROPÄISCHE PATENTSCHRIFT

(11) **EP 3 625 480 B1**
(45) Veröffentlichungstag und Bekanntmachung des Hinweises auf die Patenterteilung: **02.12.2020**
(21) Anmeldenummer: 18726381.9
(22) Anmeldetag: 14.05.2018
(51) Int. Cl.: F16H 48/40

(54) **DIFFERENTIALGETRIEBE FÜR EIN KRAFTFAHRZEUG**
DIFFERENTIAL FOR A MOTOR VEHICLE
DIFFÉRENTIEL POUR UN VÉHICULE AUTOMOBILE

(30) Priorität: 20.05.2017 DE 102017004933
(43) Veröffentlichungstag der Anmeldung: 25.03.2020
(73) Patentinhaber: Daimler AG, 70372 Stuttgart (DE)
(72) Erfinder: SPERRFECHTER, Stefan, 73072 Donzdorf (DE); EHRHARDT, Jochen, 73614 Schorndorf (DE); HENTRICH, Cornelius, 71336 Waiblingen (DE); SCHWEITZER, Juergen, 70794 Filderstadt (DE)
(74) Vertreter: JENSEN & SON
(86) Internationale Anmeldenummer: PCT/EP2018/062337
(87) Internationale Veröffentlichungsnummer: WO 2018/215227

(56) Entgegenhaltungen:
- DE-A1-102014 000 499
- US-A- 1 445 865
- US-A- 5 320 587

## Beschreibung

Die Erfindung betrifft ein Differentialgetriebe.

Aus der WO 2015/106962 A2 ist bereits ein Differentialgetriebe für ein Kraftfahrzeug, mit einem hohlförmigen Antriebszahnrad, das zur Drehmomenteinleitung vorgesehen ist, mit zumindest einem an einem Innenumfang des Antriebszahnrads angeordneten Lagerzapfen und mit zumindest einem auf dem Lagerzapfen drehbar gelagerten Ausgleichszahnrad bekannt.

Ferner sind aus der US 5 320 587 A und der gattungsgemäßen US 1 445 865 A bereits derartige Differentialgetriebe bekannt, die darüber hinaus einen Radträger aufweisen, welcher eine Außenverzahnung zu einer drehfesten Verbindung mit dem Antriebszahnrad aufweist und zu einer Aufnahme des Lagerzapfens und des Ausgleichszahnrads vorgesehen ist.

Der Erfindung liegt insbesondere die Aufgabe zugrunde, ein besonders präzises und leichtes Differentialgetriebe bereitzustellen. Sie wird durch eine erfindungsgemäße Ausgestaltung entsprechend dem Anspruch gelöst. Weiterbildungen der Erfindung ergeben sich aus den abhängigen Ansprüchen.

Die Erfindung geht aus von einem Differentialgetriebe für ein Kraftfahrzeug, mit einem hohlförmigen Antriebszahnrad, das zur Drehmomenteinleitung vorgesehen ist, mit zumindest einem an einem Innenumfang des Antriebszahnrads angeordneten Lagerzapfen und mit zumindest einem auf dem Lagerzapfen drehbar gelagerten Ausgleichszahnrad. Vorzugsweise ist das Antriebszahnrad hohlradförmig ausgebildet. Bevorzugt weist das Antriebszahnrad eine Außenverzahnung auf, welche zu einer Drehmomenteinleitung vorgesehen ist. Besonders bevorzugt ist das Antriebszahnrad von einem hohlförmigen Stirnrad gebildet.

Es wird weiter davon ausgegangen, dass das Differentialgetriebe zumindest einen Radträger aufweist, welcher zumindest eine Außenverzahnung zu einer drehfesten Verbindung mit dem Antriebszahnrad aufweist und zu einer Aufnahme des zumindest einen Lagerzapfen und des zumindest einen Ausgleichszahnrad vorgesehen ist. Vorzugsweise kann der Radträger über die Außenverzahnung sowohl direkt als auch indirekt mit dem Antriebszahnrad verbunden sein. Beispielsweise kann die Außenverzahnung des Radträgers direkt in Eingriff mit einer Innenverzahnung des Antriebszahnrads und/oder einem fest mit dem Antriebszahnrad verbundenen Bauteil, wie beispielsweise einem Trägerelement, insbesondere einem Kegelblech, stehen. Besonders bevorzugt ist der Radträger ferner zu einer direkten Aufnahme, insbesondere Lagerung, des zumindest einen Lagerzapfens vorgesehen, welcher wiederum zu einer direkten Aufnahme, insbesondere Lagerung, des zumindest einen Ausgleichszahnrads vorgesehen ist. Durch den Radträger kann daher insbesondere eine vorteilhaft präzise und genaue Aufnahme der Lagerzapfen und der Ausgleichsräder erreicht werden. Demnach kann durch die erfindungsgemäße Ausgestaltung des Differentialgetriebes insbesondere ein vorteilhaft leichtes und kompaktes Differentialgetriebe bereitgestellt werden. Gegenüber bekannten Differentialgetrieben kann insbesondere eine vorteilhafte Gewichtsersparnis erreicht werden. Ferner kann dadurch insbesondere ein vorteilhaft leicht zu montierendes Differentialgetriebe bereitgestellt werden. Des Weiteren kann ein vorteilhaft präzises Differentialgetriebe bereitgestellt werden. Es kann insbesondere ein vorteilhaft geringer Winkelfehler der Achsen der Antriebsräder erreicht werden.
Es kann insbesondere eine radial präzise Radachsenführung ohne Härteverzug bereitgestellt werden. Ferner kann eine axiale "Selbstzentrierung" bzw. eine einfache Justierbarkeit erreicht werden. Des Weiteren kann das Differentialgetriebe vorteilhaft zumindest teilweise automatisiert montiert werden. Hierdurch kann eine kurze Montagezeit erreicht werden. Zudem können vorteilhaft kurze Prozessketten bereitgestellt werden. Es können robuste Prozesse mit bewährter Technik eingesetzt werden. Ferner ist insbesondere eine hochfeste Al-Legierungen als Trägerwerkstoff, zumindest für den Radträger, einsetzbar. Des Weiteren kann eine vorteilhafte Funktionalität bei geringer Anzahl an Schweißfügestellen bereitgestellt werden.

Unter einem "Radträger" soll in diesem Zusammenhang insbesondere ein Bauteil verstanden werden, welches zu einer Aufnahme, insbesondere zu einer Lagerung und/oder Führung, zumindest eines Rads, vorzugsweise zumindest eines Zahnrads und besonders bevorzugt zumindest eines Ausgleichszahnrads, vorgesehen ist. Vorzugsweise dient der Radträger zu einer Aufnahme und Lagerung des zumindest einen Ausgleichszahnrads. Unter einem "Ausgleichszahnrad" soll in diesem Zusammenhang insbesondere ein Zahnrad verstanden werden, das zu einer Kopplung des Antriebszahnrads mit zumindest einem Abtriebszahnrad vorgesehen ist. Vorzugsweise ist das Ausgleichszahnrad mit zumindest einem Abtriebszahnrad insbesondere kämmend verbunden. Unter einem "an einem Innenumfang des Antriebszahnrads angeordneten Lagerzapfen" soll insbesondere ein Lagerzapfen verstanden werden, dessen axiale Ausdehnung innerhalb einer axialen Ausdehnung des Antriebszahnrads angeordnet ist. Vorzugsweise stellt der Lagerzapfen eine Rotationsachse für das Ausgleichszahnrad bereit, die schräg und insbesondere rechtwinklig zur Rotationsachse des Antriebszahnrads orientiert ist. Die Begriffe "axial" und "radial" sind insbesondere auf die Rotationsache des Antriebszahnrads bezogen. Unter "axial" soll insbesondere eine Richtung verstanden werden, die parallel oder koaxial zu der Rotationsachse verläuft. Unter "radial" soll insbesondere eine Richtung verstanden werden, die senkrecht zu der Rotationsachse verläuft. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß wird vorgeschlagen, dass der zumindest eine Radträger einen radial äußeren Außenring und einen zu dem Außenring beabstandeten radial inneren Innenring aufweist. Vorzugsweise ist zwischen dem radial äußeren Außenring und dem radial inneren Innenring zumindest teilweise eine Lücke angeordnet. Bevorzugt weist der Außenring die Außenverzahnung des Radträgers auf. Besonders bevorzugt sind der radial äußere Außenring und der radial innere Innenring jeweils relativ zu der Rotationsachse des Antriebszahnrads zumindest im Wesentlichen symmetrisch. Vorzugsweise weisen der radial äußere Außenring und der radial innere Innenring jeweils eine geringe Dicke in radialer Richtung als eine Tiefe in axialer Richtung auf. Dadurch kann insbesondere ein vorteilhaft stabiler und leichter Aufbau des Radträgers erreicht werden. Hierdurch kann insbesondere ein vorteilhaft leichtes und präzises Differentialgetriebe bereitgestellt werden.

Des Weiteren wird erfindungsgemäß vorgeschlagen, dass der radial äußeren Außenring und der radial innere Innenring jeweils zumindest eine Ausnehmung zu einer Aufnahme des zumindest einen Lagerzapfens aufweisen. Vorzugsweise weisen der radial äußeren Außenring und der radial innere Innenring jeweils zumindest eine Bohrung zu einer Aufnahme des zumindest einen Lagerzapfens auf. Bevorzugt ist zumindest eine Bohrung des radial äußeren Außenrings koaxial zu zumindest einer Bohrung des radial inneren Innenrings angeordnet. Der zumindest eine Lagerzapfen ist insbesondere in der zumindest einen Ausnehmung des radial äußeren Außenring und/oder des radial inneren Innenrings radial gesichert. Vorzugsweise entspricht eine Anzahl der Ausnehmungen jeweils in dem radial äußeren Außenring und dem radial inneren Innenring einer Anzahl von Lagerzapfen. Dadurch kann insbesondere eine vorteilhaft sichere und einfache Aufnahme der Lagerzapfen bereitgestellt werden. Es kann insbesondere eine leichte Montage erreicht werden. Ferner kann insbesondere ein vorteilhaft leichter und kompakter Aufbau bereitgestellt werden.

Es wird ferner vorgeschlagen, dass der zumindest eine Radträger einen Steg aufweist, welcher den radial äußeren Außenring mit dem radial inneren Innenring verbindet. Vorzugsweise sind der Steg, der radial äußere Außenring und der radial innere Innenring einstückig ausgebildet. Besonders bevorzugt weist der Radträger, insbesondere in einer Ebene, in welcher die Rotationsachse des Antriebszahnrads verläuft, einen im Wesentlichen Doppel-T-förmigen Querschnitt auf. Vorzugsweise weist der Radträger zumindest teilweise ein ringförmig verlaufendes Doppel-T-Profil auf. Dadurch kann insbesondere eine vorteilhaft stabile und trotz allem leichte Form des Radträgers bereitgestellt werden. Hierdurch kann insbesondere ein vorteilhaft leichtes und präzises Differentialgetriebe bereitgestellt werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Es wird weiter vorgeschlagen, dass der Steg des zumindest einen Radträgers zumindest eine Aussparung zu einer Aufnahme des zumindest einen Ausgleichszahnrads aufweist. Vorzugsweise ist die Aussparung von einem Fenster gebildet, welches sich in axialer Richtung vollständig durch den Radträger erstreckt. Bevorzugt erstreckt sich der Lagerzapfen in radialer Richtung durch die Aussparung und dient zu einer Lagerung des Ausgleichszahnrads. Besonders bevorzugt erstreckt sich eine Rotationsachse des zumindest einen Ausgleichszahnrads ebenfalls in radialer Richtung durch die zumindest eine Aussparung. Dadurch kann insbesondere eine vorteilhafte Aufnahme für das zumindest eine Ausgleichszahnrad bereitgestellt werden. Es kann insbesondere eine vorteilhaft sichere und präzise Aufnahme des Ausgleichszahnrads erreicht werden. Unter einer "Aussparung" soll in diesem Zusammenhang insbesondere eine Materialaussparung gegenüber einer Grundform des Radträgers, insbesondere gegenüber einem in Umfangsrichtung konstanten Querschnitt, verstanden werden. Die Materialaussparung kann dabei sowohl nachträglich in den Radträger eingebracht werden, als auch bereits bei einer Herstellung des Radträgers ausgespart werden. Vorzugsweise weist die Aussparung in zumindest einer Richtung, insbesondere in axialer Richtung, einen konstanten Querschnitt auf. Besonders bevorzugt erstreckt sich die Aussparung zumindest teilweise in den radial äußeren Außenring und/oder den radial inneren Innenring.

Ferner wird vorgeschlagen, dass der zumindest eine Lagerzapfen zumindest im Wesentlichen rohrförmig ausgebildet ist. Vorzugsweise weist der zumindest eine Lagerzapfen eine axiale Bohrung auf. Bevorzugt erstreckt sich die Bohrung über zumindest 30%, vorzugsweise über zumindest 60% und besonders bevorzugt über eine gesamte Haupterstreckungsrichtung des zumindest einen Lagerzapfens. Besonders bevorzugt weist der Lagerzapfen eine holhzylinderförmige Grundform auf. Dadurch kann der zumindest eine Lagerzapfen insbesondere vorteilhaft leicht und trotz allem stabil ausgeführt werden. Hierdurch kann insbesondere ein vorteilhaft leichtes Differentialgetriebe bereitgestellt werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Des Weiteren wird vorgeschlagen, dass der zumindest eine Lagerzapfen auf zumindest einer Stirnseite eine Verzahnung aufweist, welche zu einer Verdrehsicherung des zumindest einen Lagerzapfens vorgesehen ist. Vorzugsweise ist die Verzahnung in einem Betrieb in Eingriff mit einer Innenverzahnung, insbesondere des Antriebszahnrads und/oder einem fest mit dem Antriebszahnrad verbundenen Bauteil, wie beispielsweise einem Trägerelement, insbesondere einem Kegelblech. Bevorzugt entspricht die Verzahnung des zumindest einen Lagerzapfens zumindest annähernd, insbesondere hinsichtlich einer Zahngeometrie und/oder einer Zahndimensionierung, einer Außenverzahnung des Radträgers. Besonders bevorzugt weist in einem montierten Zustand eine radial äußere Stirnseite des zumindest einen Lagerzapfens die Verzahnung auf. Dadurch kann insbesondere konstruktiv einfach eine Verdrehsicherung bereitgestellt werden. Es kann insbesondere eine Verdrehsicherung bereitgestellt werden, bei welcher insbesondere eine ohnehin benötigte Verzahnung genutzt werden kann. Es kann insbesondere eine vorteilhaft sichere und präzise Verdrehsicherung bereitgestellt werden.

Ferner ist dadurch insbesondere eine Montage, bei welcher keine Verdrehsicherung vorliegt nicht möglich. Unter einer "Stirnseite" soll in diesem Zusammenhang insbesondere eine Seite des Lagerzapfens verstanden werden, welche sich zumindest im Wesentlichen senkrecht zu einer Haupterstreckungsrichtung des Lagerzapfens erstreckt.

Es wird ferner vorgeschlagen, dass der zumindest eine Lagerzapfen zumindest eine sich zumindest im Wesentlichen radial erstreckende Beölungsbohrung aufweist. Vorzugsweise erstreckt sich die Beölungsbohrung vollständig durch den Lagerzapfen. Bevorzugt dient die Beölungsbohrung insbesondere zu einer Beölung einer Lauffläche zwischen dem zumindest einen Lagerzapfen und dem Ausgleichszahnrad. Besonders bevorzugt kann über die axiale Bohrung des zumindest einen Lagerzapfens Öl zu der Beölungsbohrung gelangen. Die Beölungsbohrung ist insbesondere mit der axialen Bohrung des zumindest einen Lagerzapfens verbunden. Dadurch kann insbesondere zuverlässig eine Beölung, insbesondere der Lauffläche zwischen dem zumindest einen Lagerzapfen und dem Ausgleichszahnrad, gewährleistet werden. Es kann zuverlässig eine Ölversorgung bereitgestellt werden. Unter einer "sich zumindest im Wesentlichen radial erstreckenden Beölungsbohrung" soll in diesem Zusammenhang insbesondere eine Beölungsbohrung verstanden werden, welche sich bezogen auf eine Lagerachse, welche sich insbesondere parallel zu der Haupterstreckungsrichtung des Lagerzapfens und durch einen geometrischen Mittelpunk des Lagerzapfens erstreckt, zumindest im Wesentlichen radial erstreckt. Unter "zumindest im Wesentlichen" soll in diesem Zusammenhang insbesondere verstanden werden, dass eine Abweichung von einem vorgegebenen Wert, also insbesondere einem kleinsten Winkel von 90° zwischen der Lagerachse und der Erstreckungsrichtung der Beölungsbohrung, insbesondere weniger als 25°, vorzugsweise weniger als 10° und besonders bevorzugt weniger als 5° beträgt.

Es wird weiter vorgeschlagen, dass ein Wert eines Radius des radial inneren Innenrings zumindest 60% eines Werts des Radius des radial äußeren Außenrings beträgt. Vorzugsweise beträgt der Wert eines Radius des radial inneren Innenrings zumindest 70%, besonders bevorzugt zumindest annähernd 75%, eines Werts des Radius des radial äußeren Außenrings. Besonders bevorzugt beträgt der Radius des radial inneren Innenrings zumindest annähernd 3/4 des Radius des radial äußeren Außenrings. Dadurch kann insbesondere eine vorteilhafte Geometrie des Radträgers bereitgestellt werden. Unter einem "Wert des Radius" eines Bauteils soll in diesem Zusammenhang insbesondere der radiale Abstand von einer Rotationsachse des Bauteils zu einem radial äußersten Punkt des Bauteils verstanden werden.

Ferner wird vorgeschlagen, dass ein Wert eines Radius des Ausgleichszahnrads zumindest 10% eines Werts des Radius des radial äußeren Außenrings beträgt. Vorzugsweise beträgt ein Wert eines Radius des Ausgleichszahnrads zumindest 15%, besonders bevorzugt zumindest annähernd 16%, eines Werts des Radius des radial äußeren Außenrings. Besonders bevorzugt beträgt der Radius des Ausgleichszahnrads annähernd 1/6 des Radius des radial äußeren Außenrings. Dadurch kann insbesondere eine vorteilhafte Geometrie des Differentialgetriebes bereitgestellt werden. Es kann insbesondere ein vorteilhaft kompaktes Differentialgetriebe bereitgestellt werden.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer Antriebseinheit, mit einem Mehrstufengetriebe und mit einem erfindungsgemäßen Differentialgetriebe in einer schematischen Darstellung,
- Fig. 2: das erfindungsgemäße Differentialgetriebe mit einem Antriebszahnrad, in einer schematischen Seitenansicht,
- Fig. 3: das erfindungsgemäße Differentialgetriebe mit dem Antriebszahnrad und mit einem Radträger in einer schematischen Schnittdarstellung entlang der Schnittlinie III-III,
- Fig. 4: ein Detail IV des erfindungsgemäßen Differentialgetriebes mit dem Antriebszahnrad, mit dem Radträger, mit einem Lagerzapfen und mit einem Ausgleichszahnrad in einer schematischen Schnittdarstellung,
- Fig. 5: das Detail IV des erfindungsgemäßen Differentialgetriebes in einer alternativen Drehstellung des Antriebszahnrads, insbesondere um 30° gegenüber der Figur 4 verdreht, in einer schematischen Schnittdarstellung,
- Fig. 6: das erfindungsgemäße Differentialgetriebe mit dem Antriebszahnrad und mit dem Radträger in einer schematischen Schnittdarstellung entlang der Schnittlinie VI-VI,
- Fig. 7: den Radträger des erfindungsgemäßen Differentialgetriebes in einer schematischen Darstellung,
- Fig. 8: einen Teilausschnitt des Radträgers des erfindungsgemäßen Differentialgetriebes in einer schematischen Frontansicht,
- Fig. 9: den Lagerzapfen des erfindungsgemäßen Differentialgetriebes in einer schematischen Darstellung und
- Fig. 10: den Lagerzapfen des erfindungsgemäßen Differentialgetriebes in einer schematischen Halbschnittdarstellung.

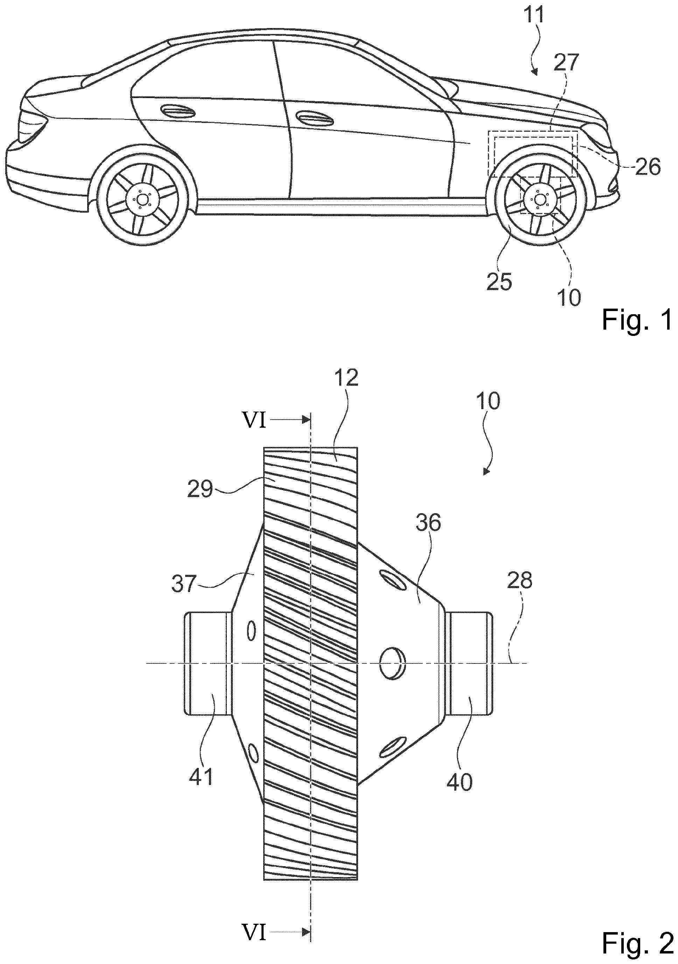

Die Figur 1 zeigt schematisch ein Kraftfahrzeug 11. Das Kraftfahrzeug 11 umfasst einen Antriebsstrang über welchen nicht weiter sichtbar Antriebsräder 25 des Kraftfahrzeugs 11 angetrieben werden. Der Antriebsstrang umfasst eine Antriebseinheit 26. Die Antriebseinheit 26 ist von einer Brennkraftmaschine gebildet. Die Antriebseinheit 26 ist von einem Verbrennungsmotor gebildet. Ferner weist das Kraftfahrzeug 11 ein Mehrstufengetriebe 27 auf. Die Antriebseinheit 26 weist eine angetriebene Kurbelwelle auf, welche mit einem Getriebeeingangselement des Mehrstufengetriebes 27 verbunden ist. Das Mehrstufengetriebe 27 ist von einem Kraftfahrzeuggetriebe gebildet. Das Mehrstufengetriebe 27 bildet einen Teil des Antriebsstrangs des Kraftfahrzeugs 11. Das Mehrstufengetriebe 27 ist entlang des Antriebsstrangs, insbesondere entlang eines Kraftflusses des Antriebsstrangs, hinter der Antriebseinheit 26 angeordnet. Ferner weist das Kraftfahrzeug 11 ein Differentialgetriebe 10 auf. Das Differentialgetriebe 10 dient zu einer Übertragung einer Antriebskraft auf die Antriebsräder 25. Das Mehrstufengetriebe 27 weist ein Getriebeausgangselement auf, welches mit dem Differentialgetriebe 10 verbunden ist. Das Differentialgetriebe 10 wird in einem Betrieb über das Mehrstufengetriebe 27 von der Antriebseinheit 26 angetrieben.

Figur 2 zeigt das Differentialgetriebe 10 des Kraftfahrzeugs 11. Das Differentialgetriebe 10 bildete einen Teil eines Achsantriebs. Das Differentialgetriebe 10 ermöglicht einen Ausgleich unterschiedlicher Wege der Antriebsräder 25, insbesondere bei einer Kurvenfahrt. Das Differentialgetriebe 10 ist als ein Achsdifferential ausgebildet. Zur Anbindung des Differentialgetriebes 10 an die Antriebsräder 25 weist der Achsantrieb zwei nicht weiter sichtbare Abtriebswellen auf. Die Abtriebswellen sind koaxial zueinander angeordnet. Die Abtriebswellen sind als Achsseitenwellen ausgebildet.

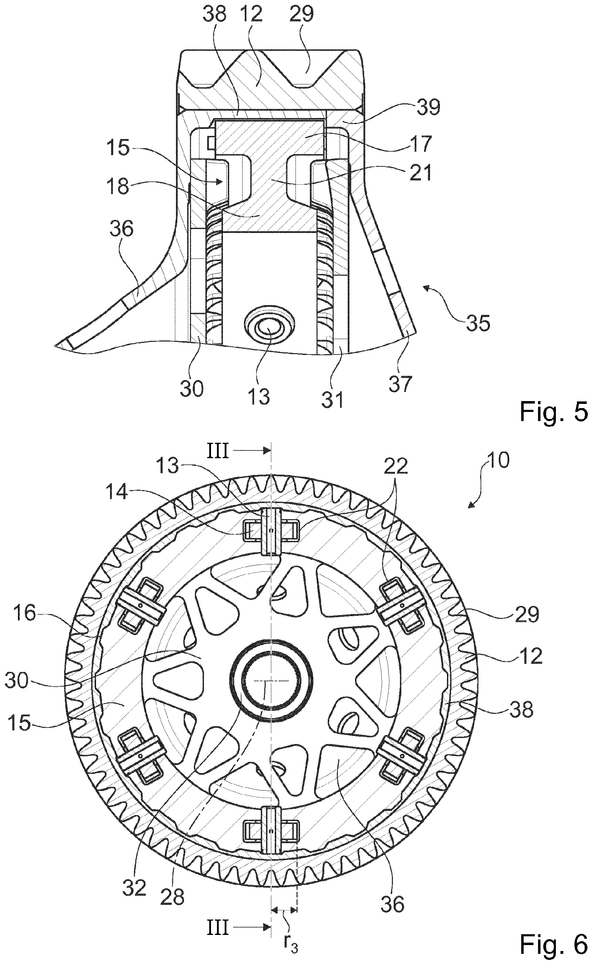

Das Differentialgetriebe 10 weist ein hohlförmiges Antriebszahnrad 12 auf. Das Antriebszahnrad 12 ist von einem hohlförmigen Stirnrad gebildet. Das Antriebszahnrad 12 ist zur Drehmomenteinleitung vorgesehen. Das Antriebszahnrad 12 weist eine Rotationsachse 28 auf. Das Antriebszahnrad 12 weist ferner zur Drehmomenteinleitung eine Außenverzahnung 29 auf. Die Außenverzahnung 29 ist als eine Schrägverzahnung ausgebildet. Das Antriebszahnrad 12 ist schrägverzahnt (Figuren 2, 6).

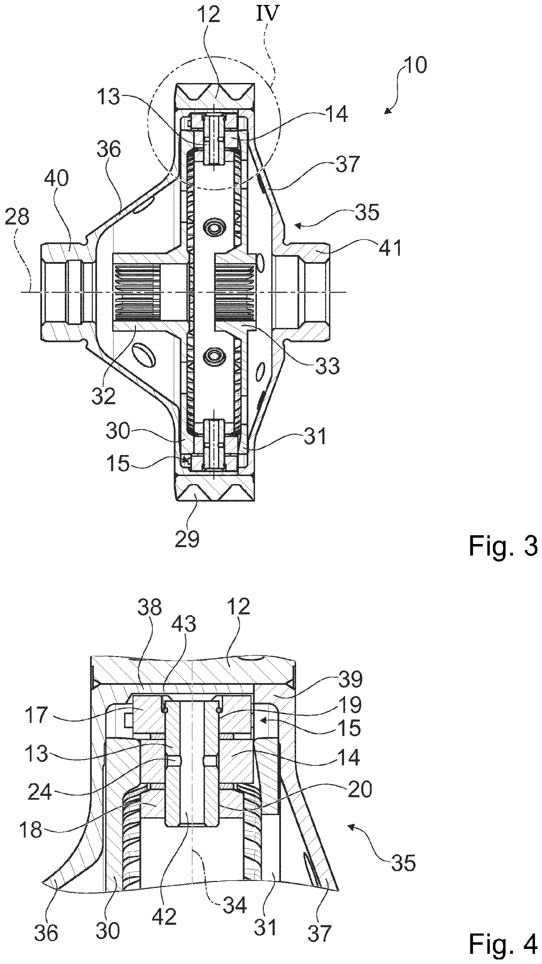

Zur Drehmomentausleitung weist das Differentialgetriebe 10 zwei Abtriebszahnräder 30, 31 auf, die jeweils antriebstechnisch an eines der Antriebsräder 25 angebunden sind. Zur Anbindung der Abtriebszahnräder 30, 31 des Differentialgetriebes 10 an die Antriebsräder 25 weist das Differentialgetriebe 10 zwei Abtriebsnaben 32, 33 auf. Die erste Abtriebsnabe 32 ist drehfest mit einer ersten Abtriebswelle verbunden und die zweite Abtriebsnabe 33 ist drehfest mit einer zweiten Abtriebswelle verbunden. Dazu weisen die Abtriebsnaben 32, 33 jeweils eine Innenverzahnung auf, die permanent in eine Außenverzahnung der entsprechenden Abtriebswelle drehmomentübertragend eingreift. Das erste Abtriebszahnrad 30 ist drehfest mit der ersten Abtriebsnabe 32 verbunden und das zweite Abtriebszahnrad 31 ist drehfest mit der zweiten Abtriebsnabe 44 verbunden. Das erste Abtriebszahnrad 30 ist einstückig mit der ersten Abtriebsnabe 32 ausgebildet und das zweite Abtriebszahnrad 31 ist einstückig mit der zweiten Abtriebsnabe 44 ausgebildet. Die beiden Abtriebsnaben 32, 33 sind koaxial zueinander angeordnet. Die beiden Abtriebszahnräder 30, 31 sind koaxial zueinander angeordnet. Das Antriebszahnrad 12, die Abtriebsnaben 32, 33 und die Abtriebszahnräder 30, 31 sind koaxial zueinander angeordnet. Die Abtriebszahnräder 30, 31 und die Abtriebsnaben 32, 33 weisen jeweils eine Rotationsachse auf, die mit der Rotationsachse 28 des Antriebszahnrads 12 zusammenfällt (Figur 3).

Ferner weist das Differentialgetriebe 10 mehrere Ausgleichszahnräder 14 auf. Zur antriebstechnischen Anbindung des Antriebszahnrads 12 an die beiden Abtriebszahnräder 30, 31 weist das Differentialgetriebe 10 die mehreren Ausgleichszahnräder 14 auf, wobei der Übersichtlichkeit halber lediglich das Ausgleichszahnrad 14 mit einem Bezugszeichen versehen ist. In diesem Ausführungsbeispiel weist das Differentialgetriebe 10 sechs Ausgleichszahnräder 14 auf. Die Ausgleichszahnräder 14 sind spanend hergestellt. Grundsätzlich können die Ausgleichszahnräder 14 auch spanlos hergestellt sein, wie beispielsweise geschmiedet, gesintert oder feingeschnitten. Weiter ist es grundsätzlich denkbar, dass das Differentialgetriebe 10 auch eine andere Anzahl an Ausgleichszahnrädern 14 aufweist (Figuren 4, 6).

Die Ausgleichszahnräder 14 sind jeweils mit beiden Abtriebszahnrädern 30, 31 kämmend verbunden. Zur kämmenden Verbindung mit den Abtriebszahnrädern 30, 31 weisen die Ausgleichszahnräder 14 jeweils eine Außenverzahnung auf. Die Abtriebszahnräder 30, 31 weisen zur kämmenden Verbindung mit den Ausgleichszahnrädern 14 jeweils eine radial außenliegende Verzahnung auf. Die Verzahnungen verlaufen um einen gesamten äußeren Umfang des entsprechenden Abtriebszahnrads 30, 31. Die Verzahnungen der Abtriebszahnräder 30, 31 sind einander zugewandt. Die Verzahnungen der Abtriebszahnräder 30, 31 sind bezüglich der Rotationsachse 28 des Antriebszahnrads 12 jeweils axial gerichtet.

Die Abtriebszahnräder 30, 31 sind jeweils als ein Kronenrad ausgebildet. Die Abtriebszahnräder 30, 31 sind spanend hergestellt. Grundsätzlich können die Abtriebszahnräder 30, 31 auch spanlos hergestellt sein, wie beispielsweise geschmiedet, gesintert oder feingeschnitten. Weiter ist es grundsätzlich denkbar, dass die Abtriebszahnräder 30, 31 jeweils auch als ein Kegel- oder Tellerrad ausgebildet sind (Figur 4).

Zur Gewichtseinsparung weisen die Abtriebszahnräder 30, 31 jeweils radial zwischen ihrer Verzahnung und der jeweiligen Abtriebsnabe 32, 33 mehrere Materialfehlstellen auf. Die Materialfehlstellen sind dreieckförmig ausgebildet, können aber grundsätzlich auch eine andere geometrische Form, wie beispielsweise eine Kreisform oder eine Rechteckform, aufweisen (Figur 6).

Die Ausgleichszahnräder 14 sind um einen Umfang des Antriebszahnrads 12 gleichmäßig verteilt angeordnet. Die Ausgleichszahnräder 14 sind in Umfangsrichtung des Antriebszahnrads 12 und in axialer Richtung des Antriebszahnrads 12 fest mit dem Antriebszahnrad 12 verbunden. Sie sind in Drehrichtung um die Rotationsachse 28 fest mit dem Antriebszahnrad 12 verbunden. Die Ausgleichszahnräder 14 rotieren im Verbund um die Rotationsachse 28 mit dem Antriebszahnrad 12 mit (Figur 6).

Die Ausgleichszahnräder 14 weisen jeweils eine eigene Rotationsachse auf. Der Übersichtlichkeit halber ist lediglich die Rotationsachse 34 des Ausgleichszahnrads 14 dargestellt. Die Ausgleichszahnräder 14 sind jeweils um ihre eigene Rotationsachse 34 drehbar. Bei einem rotierenden Antriebszahnrad 12 rotieren die Ausgleichszahnräder 14 im Verbund um die Rotationsachse 28 des Antriebszahnrads 12 und können zusätzlich jeweils um ihre eigene Rotationsachse 34 relativ zum Antriebszahnrad 12 rotieren, wodurch der Ausgleich unterschiedlicher Wege der Antriebsräder 25, insbesondere bei einer Kurvenfahrt, ermöglicht wird. Die eigenen Rotationsachsen 34 der Ausgleichszahnräder 14 sind senkrecht zur Rotationsachse 28 des Antriebszahnrads 12 orientiert.

Die Ausgleichszahnräder 14 haben keine Kegelform sondern eine im Wesentlichen zylindrische Form, und ihre Außenverzahnungen kämmen mit Verzahnungen der als Kronenräder ausgebildeten Abtriebszahnräder 30, 31. Dabei haben die Verzahnungen der beiden als Kronenräder ausgebildeten Abtriebszahnräder 30, 31 einen gleichen Radius bezogen auf die Rotationsachse 28 des Antriebszahnrads 12, wobei die Abtriebszahnrädert 30, 31 koaxial zu der Rotationsachse 28 des Antriebszahnrades 12 angeordnet sind.

Die Verzahnungen der als Kronenräder ausgebildeten Abtriebszahnräder 30, 31 sind einander in axialer Richtung zugewandt und ein Außendurchmesser der Abtriebszahnräder 30, 31 ist größer als 60 % eines Außendurchmessers des Antriebszahnrades 12. Ein maximaler Außendurchmesser der Ausgleichszahnräder 14 ist kleiner als 40 % eines maximalen Außendurchmessers der Abtriebszahnräder 30, 31. Eine axiale Erstreckung der Verzahnungen der beiden Abtriebszahnräder 30, 31 ist jeweils kleiner als 15 % des Außendurchmessers der Abtriebszahnräder 30, 31. Somit ist insgesamt durch das erfindungsgemäße Konzept auch eine jeweilige Dimensionierung von Einzelteilen des Differentialgetriebes möglich, welche zu einem axial sehr kurz bauenden und leichten Differentialgetriebe führen. Das erfindungsgemäße Differentialgetriebe unterscheidet sich somit hinsichtlich seiner Dimensionierung stark von einem Kegelradachsgetriebe.

Die Ausgleichszahnräder 14 und die Abtriebszahnräder 30, 31 sind axial und radial innerhalb des Antriebszahnrads 12 angeordnet. Das Antriebszahnrad 12 weist eine axiale Erstreckung auf, die größer ist als eine axiale Erstreckung der Ausgleichszahnräder 14 und der mit den Ausgleichszahnrädern 14 kämmenden Abtriebszahnräder 30, 31. Die Ausgleichszahnräder 14 sind axial zwischen den Abtriebszahnrädern 30, 31 angeordnet (Figur 4).

Ferner weist das Differentialgetriebe 10 mehrere Lagerzapfen 13 auf. Die Lagerzapfen 13 sind an einem Innenumfang des Antriebszahnrads 12 angeordnet. Die Ausgleichszahnräder 14 sind auf dem Lagerzapfen 13 drehbar gelagert. Eine Anzahl der Ausgleichszahnräder 14 entspricht einer Anzahl der Lagerzapfen 13. Die Lagerzapfen 13 sind in Umfangsrichtung gleichmäßig verteilt. Jeweils ein Lagerzapfen 13 nimmt jeweils ein Ausgleichszahnrad 14 drehbar auf. Der Übersichtlichkeit halber ist lediglich der Lagerzapfen 13, der das Ausgleichszahnrad 14 drehbar aufnimmt, mit einem Bezugszeichen versehen. Die Lagerzapfen 13 stellen jeweils die entsprechende eigene Rotationsachse 34 für das jeweilige Ausgleichszahnrad 14 bereit. Die Lagerzapfen 13 erstrecken sich zur drehbaren Aufnahme eines Ausgleichszahnrads 14 ausgehend von dem Innendurchmesser des Antriebszahnrads 12 in Richtung der Rotationsachse 28 des Antriebszahnrads 12. Sie sind einander zugewandt. Die Ausgleichszahnräder 14 sind jeweils auf den entsprechenden Lagerzapfen 13 radial aufgesteckt. Die Lagerzapfen 13 definieren jeweils eine Lagerachse, welche mit der Rotationsachse 34 des jeweils zugeordneten Ausgleichszahnrads 14 zusammenfällt (Figuren 4, 6).

Die Lagerzapfen 13 sind im Wesentlichen rohrförmig ausgebildet. Die Lagerzapfen 13 sind rohrförmig ausgebildet. Die Lagerzapfen 13 weisen jeweils eine holhzylinderförmige Grundform auf. Die Lagerzapfen 13 weisen jeweils eine axiale Bohrung 42 auf. Die axialen Bohrungen 42 erstrecken sich jeweils über eine gesamte Haupterstreckungsrichtung des jeweiligen Lagerzapfens 13. Die axialen Bohrungen 42 erstrecken sich jeweils entlang der Lagerachse des jeweiligen Lagerzapfens 13. Die axialen Bohrungen 42 erstrecken sich jeweils entlang der Lagerachse durch den gesamten Lagerzapfen 13 (Figuren 4, 9, 10).

Ferner weisen die Lagerzapfen 13 jeweils eine sich zumindest im Wesentlichen radial erstreckende Beölungsbohrung 24 auf. Die Lagerzapfen 13 weisen jeweils eine sich radial erstreckende Beölungsbohrung 24 auf. Die Beölungsbohrungen 24 erstrecken sich jeweils vollständig durch den jeweiligen Lagerzapfen 13. Die Beölungsbohrungen 24 dienen jeweils zu einer Beölung einer Lauffläche zwischen den Lagerzapfen 13 und den Ausgleichszahnrädern 14. Über die axialen Bohrungen 42 der Lagerzapfen 13 kann Öl aus einem Inneren des Differentialgetriebes 10 zu den Beölungsbohrungen 24 gelangen. Die Beölungsbohrungen 24 sind jeweils mit der axialen Bohrung 42 des jeweiligen Lagerzapfens 13 verbunden. Die Beölungsbohrungen 24 erstrecken sich jeweils durch die axiale Bohrung 42 des jeweiligen Lagerzapfens 13 hindurch. Die Beölungsbohrungen 24 sind jeweils zweiteilig ausgebildet und auf gegenüberliegenden Seiten der axialen Bohrung 42 des jeweiligen Lagerzapfens 13 angeordnet (Figuren 4, 9, 10).

Die Lagerzapfen 13 werden aus einem Stangenmaterial, insbesondere C50R, hergestellt. Eine Bearbeitung erfolgt durch Ablängen, Drehen, Bohren und Fräsen. Anschließend erfolgt eine Induktionshärtung sowie ein spitzenloses Schleifen. Darauffolgend werden die Lagerzapfen 13 gereinigt und konserviert.

Zur Lagerung des Antriebszahnrads 12 weist das Differentialgetriebe 10 einen Antriebsradträger 35 auf, der das Antriebszahnrad 12 axial beidseitig abstützt. Zur axial beidseitigen Abstützung des Antriebszahnrads 12 weist der Antriebsradträger 35 ein erstes Trägerelement 36 und ein zweites Trägerelement 37 auf. Die zwei Trägerelemente 36, 37 sind an einem Innenumfang des Antriebszahnrads 12 abstützend angeordnet. Sie liegen an dem Innenumfang des Antriebszahnrads 12 abstützend an. Die Trägerelemente 36, 36 sind jeweils bezüglich der Rotationsachse 28 im Wesentlichen rotationssymmetrisch ausgebildet. Die Trägerelemente 36, 37 sind jeweils kreisringförmig ausgebildet. Die Lagerzapfen 13, die Ausgleichszahnräder 14 und die Abtriebszahnräder 30, 31 sind axial zwischen den zwei Trägerelementen 36, 37 angeordnet. Ferner sind die Abtriebsnaben 32, 33 axial zwischen den zwei Trägerelementen 36, 37 angeordnet. Zur Aufnahme des Antriebszahnrads 12 weisen die Trägerelemente 36, 37 jeweils eine radial außenliegende Stützstelle 38, 39 auf. Die Trägerelemente 36, 37 greifen mit ihren Stützstellen 38, 39 stützend an dem Antriebszahnrad 12 an. Sie kontaktieren das Antriebszahnrad 12 jeweils mit ihrer Stützstelle 38, 39. Die Trägerelemente 36, 37 sind jeweils mittels ihrer Stützstelle 38, 39 an dem Antriebszahnrad 12 angebunden (Figuren 3,6).

Das erste Trägerelement 36 ist mit oder an seiner radial außenliegenden Stützstelle 38 fest an dem Antriebszahnrad 12 angeordnet. Es ist mit oder an seiner radial außenliegenden Stützstelle 38 fest mit dem Antriebszahnrad 12 verbunden. Das erste Trägerelement 36 ist mit oder an seiner radial außenliegenden Stützstelle 38 mit dem Antriebszahnrad 12 verschweißt. Die Stützstelle 38 des ersten Trägerelements 36 ist an einem radial äußeren Ende des ersten Trägerelements 36 angeordnet. Die Stützstelle 38 des ersten Trägerelements 36 verläuft um einen gesamten äußeren Umfang des ersten Trägerelements 36. Das zweite Trägerelement 37 ist mit oder an seiner radial außenliegenden Stützstelle 38 fest an dem Antriebszahnrad 12 angeordnet. Es ist mit oder an seiner radial außenliegenden Stützstelle 39 fest mit dem Antriebszahnrad 12 verbunden. Das zweite Trägerelement 37 ist mit oder an seiner radial außenliegenden Stützstelle 39 mit dem Antriebszahnrad 12 verschweißt. Die Stützstelle 39 des zweiten Trägerelements 37 ist an einem radial äußeren Ende des zweiten Trägerelements 37 angeordnet. Die Stützstelle 39 des zweiten Trägerelements 37 verläuft um einen gesamten äußeren Umfang des zweiten Trägerelements 37.

Ferner weist das erste Trägerelement 37 an seiner Stützstelle 38 eine Innenverzahnung auf, welche zu einer Drehmomentübertragung des Antriebszahnrads 12 vorgesehen ist.

Die Innenverzahnung ist durch Drückwälzen in das erste Trägerelement 37 eingeformt. Die Innenverzahnung ist in Hohlzahnausführung gestaltet. Grundsätzlich wäre jedoch auch eine andere, einem Fachmann als sinnvoll erscheinende Ausführung denkbar. Grundsätzlich wäre auch denkbar, dass die Innenverzahnung direkt an einem Innenumfang des Antriebszahnrads 12 angeformt ist. Der Außendurchmesser des Trägerelements 37 an seiner Stützstelle 38 ist zylinderisch.

Zur Lagerung gegenüber den Abtriebswellen weisen die Trägerelemente 36, 37 jeweils eine radial innenliegende Lagerstelle 40, 41 auf. Die Trägerelemente 36, 37 sind jeweils mittels der radial innenliegenden Lagerstelle 40, 41 mittelbar an den Abtriebswellen gelagert. Die innenliegende Lagerstellen 40, 41 der Trägerelemente 36, 37 sind nabenförmig ausgebildet.

Zur Gewichtseinsparung sind die Trägerelemente 36, 37 jeweils als ein Dünnwandträgerelement ausgebildet. Die Trägerelemente 36, 37 weisen dazu jeweils eine Wanddicke von höchstens vier Millimeter auf. Die Trägerelemente 36, 37 sind jeweils als ein Trägerblech ausgebildet. Damit die als Dünnwandträgerelemente ausgebildeten Trägerelemente 36, 37 das Antriebszahnrad 12 zuverlässig abstützen, sind die Trägerelemente 36, 37 abschnittsweise konisch geformt. Die Trägerelemente 36, 37 sind als Kegelblech ausgebildet. Die Trägerelemente 36, 37 bestehen aus dem Kegelblechwerkstoff "LH800". Der Kegelblechwerkstoff wird günstigerweise nicht mehr komplett gehärtet. Ferner werden die Radien bedarfsweise nach dem Drehen festgewalzt oder gegebenenfalls partiell induktiv gehärtet.

Das erste Trägerelement 36 weist zwischen seiner radial außenliegenden Stützstelle 38 und seiner radial innenliegenden Lagerstelle 40 einen axial schräg verlaufenden Teilabschnitt auf. In dem schräg verlaufenden Teilabschnitt ist das erste Trägerelement 36 konisch ausgebildet. Der axial schräg verlaufende Teilabschnitt des ersten Trägerelements 36 weist eine Steigung auf, die durch einen durch die Rotationsachse 28 des Antriebszahnrads 12 und den axial schräg verlaufenden Teilabschnitt eingeschlossenen Winkel gebildet ist. Der durch die Rotationsachse 28 des Antriebszahnrads 12 und den axial schräg verlaufenden Teilabschnitt eingeschlossene Winkel ist ungleich 0° und ungleich 90°. Durch den axial schräg verlaufenden Teilabschnitt sind die Stützstelle 38 des ersten Trägerelements 36 und die Lagerstelle 40 des ersten Trägerelements 36 axial voneinander beabstandet.

Das zweite Trägerelement 37 weist zwischen seiner radial außenliegenden Stützstelle 39 und seiner radial innenliegenden Lagerstelle 41 einen axial schräg verlaufenden Teilabschnitt auf. In dem schräg verlaufenden Teilabschnitt ist das zweite Trägerelement 37 konisch ausgebildet. Der axial schräg verlaufende Teilabschnitt des zweiten Trägerelements 37 weist eine Steigung auf, die durch einen zwischen der Rotationsachse 28 des Antriebszahnrads 12 und dem axial schräg verlaufenden Teilabschnitt eingeschlossenen Winkel gebildet ist. Der durch die Rotationsachse 28 des Antriebszahnrads 12 und den axial schräg verlaufenden Teilabschnitt eingeschlossene Winkel ist ungleich 0° und ungleich 90°. Durch den axial schräg verlaufenden Teilabschnitt sind die Stützstelle 39 des zweiten Trägerelements 37 und die Lagerstelle 41 des zweiten Trägerelements 37 axial voneinander beabstandet. Die außenliegenden Stützstellen 38, 39 der Trägerelemente 36, 37 weisen einen axialen Abstand zueinander auf, der kleiner ist als ein axialer Abstand zwischen den innenliegenden Lagerstellen 40, 41 der Trägerelemente 36, 37.

Die Steigung des axial schräg verlaufenden Teilabschnitts des ersten Trägerelements 36 und die Steigung des axial schräg verlaufenden Teilabschnitts des zweiten Trägerelements 37 unterscheiden sich voneinander. Die Steigung des axial schräg verlaufenden Teilabschnitts des ersten Trägerelements 36 ist kleiner als die Steigung des axial schräg verlaufenden Teilabschnitts des zweiten Trägerelements 37. Der axial schräg verlaufende Teilabschnitt des zweiten Trägerelements 37 ist steiler als der axial schräg verlaufende Teilabschnitt des ersten Trägerelements 36.

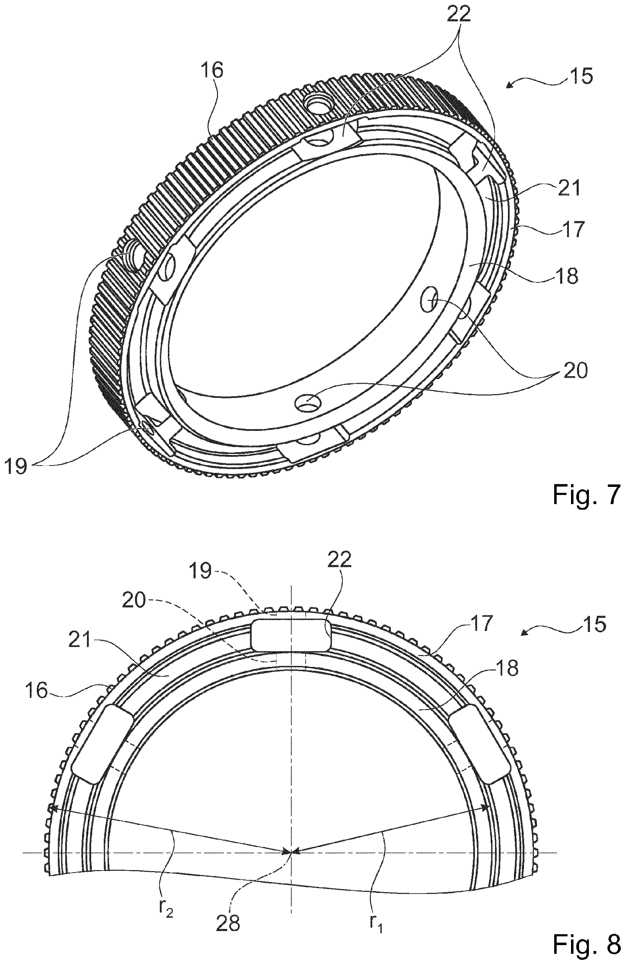

Des Weiteren weist das Differentialgetriebe 10 einen Radträger 15 auf. Der Radträger 15 ist radial innerhalb des Antriebszahnrads 12 angeordnet. Der Radträger 15 weist eine Außenverzahnung 16 zu einer drehfesten Verbindung mit dem Antriebszahnrad 12 auf. Die Außenverzahnung 16 des Radträgers 15 ist von einer Steckverzahnung gebildet. Die Außenverzahnung 16 des Radträgers 15 ist in einem montierten Zustand in Eingriff mit der Innenverzahnung der Stützstelle 38 des ersten Trägerelements 36. Die Innenverzahnung der Stützstelle 38 des ersten Trägerelements 36 dient daher als Mitnahme für den Radträger 15. Grundsätzlich wäre jedoch auch denkbar, dass die Außenverzahnung 16 des Radträgers 15 in einem montierten Zustand direkt in Eingriff mit einer Innenverzahnung des Antriebszahnrads 12 steht. Der Radträger 15 ist drehfest mit dem Antriebszahnrad 12 verbunden. Die Verzahnung zwischen dem Radträger 15 und der Stützstelle 38 des ersten Trägerelements 36 ist von einer Steckverzahnung gebildet und lässt eine axiale Positionierung zu. Der Radträger 15 besteht aus einer Aluminiumlegierung. Hierdurch kann keine hohe Festigkeit, wie beispielsweise nach EN AW-6182 T6 ermöglicht werden. Grundsätzlich wäre jedoch auch ein anderes, einem Fachmann als sinnvoll erscheinendes Material denkbar (Figuren 6, 7).

Ferner weist der Radträger 15 einen radial äußeren Außenring 17 und einen zu dem Außenring 17 beabstandeten radial inneren Innenring 18 auf. Der radial äußere Außenring 17 und der radial innere Innenring 18 sind jeweils kreisringförmig ausgebildet. Zwischen dem radial äußeren Außenring 17 und dem radial inneren Innenring 18 ist teilweise eine Lücke angeordnet. Der Außenring 17 weist die Außenverzahnung 16 des Radträgers 15 auf. Die Außenverzahnung 16 ist auf einer radialen Außenseite des Außenrings 17 angeordnet. Der radial äußere Außenring 17 und der radial innere Innenring 18 sind jeweils relativ zu der Rotationsachse 28 des Antriebszahnrads 12 im Wesentlichen symmetrisch ausgebildet. Der radial äußere Außenring 17 und der radial innere Innenring 18 weisen jeweils eine geringe Dicke in radialer Richtung als eine Tiefe in axialer Richtung auf. Der radial äußere Außenring 17 weist beispielhaft eine Dicke von 6,5 mm auf. Ferner weist der radial innere Innenring 18 beispielhaft eine Dicke von 8 mm auf. Des Weiteren weisen der radial äußere Außenring 17 und der radial innere Innenring 18 jeweils eine Tiefe in axialer Richtung von 25 mm auf. Um eine größere Wanddicke des Außenringes 17 zu erhalten, wird ein Innendurchmesser des Antriebszahnrads 12 vergrößert und damit die Fügestellen zu den Trägerelementen 36, 37 (Figuren 6, 8).

Ein Wert eines Radius r₁ des radial inneren Innenrings 18 beträgt zumindest 60% eines Werts des Radius r₂ des radial äußeren Außenrings 17. Der Wert des Radius r₁ des radial inneren Innenrings 18 beträgt annähernd 75% eines Werts des Radius r₂ des radial äußeren Außenrings 17.Der Radius r₁ des radial inneren Innenrings 18 beträgt annähernd 3/4 des Radius r₂ des radial äußeren Außenrings 17. Der radial innere Innenring 18 weist beispielhaft einen Radius r₁ von 76 mm auf. Der radial äußere Außenring 17 weist beispielhaft einen Radius r₂ von 91,5 mm auf (Figur 8).

Des Weiteren weist der Radträger 15 einen Steg 21 auf. Der Steg 21 ist im Wesentlichen kreisringförmig ausgebildet. Der Steg 21 verbindet den radial äußeren Außenring 17 mit dem radial inneren Innenring 18. Der Steg 21, der radial äußere Außenring 17 und der radial innere Innenring 18 sind einstückig ausgebildet. Grundsätzlich wäre jedoch auch eine andere, einem Fachmann als sinnvoll erscheinende Verbindung zwischen dem Steg 21, dem radial äußeren Außenring 17 und dem radial inneren Innenring 18 denkbar. Der Radträger 15 weist, in einer Ebene, in welcher die Rotationsachse 28 des Antriebszahnrads 12 verläuft, einen im Wesentlichen Doppel-T-förmigen Querschnitt auf.

Der Radträger 15 weist ein ringförmig verlaufendes Doppel-T-Profil auf. Der Radträger 15 weist in axialer Richtung beispielhaft eine Dicke von 8 mm auf (Figur 5).

Ferner wäre denkbar, dass mittels Dispal gegebenfalls zudem auf Anlaufscheiben verzichtet werden kann, sodass mehr Wanddicke für das Einpressen nutzbar ist.

Der Radträger 15 ist zu einer Aufnahme der Lagerzapfen 13 und der Ausgleichszahnräder 14 vorgesehen. Die Lagerzapfen 13 werden mittels des Radträgers 15 relativ zueinander positioniert. Der radial äußere Außenring 17 und der radial innere Innenring 18 weisen jeweils mehrere Ausnehmungen 19, 20 zu einer Aufnahme der Lagerzapfen 13 auf. Eine Anzahl der Ausnehmungen 19 des radial äußeren Außenrings 17 sowie eine Anzahl der Ausnehmungen 20 des radial inneren Innenrings 18 entspricht einer Anzahl der Lagerzapfen 13. Die Ausnehmungen 19, 20 sind jeweils von Bohrungen gebildet. Grundsätzlich wäre jedoch auch eine andere, einem Fachmann als sinnvoll erscheinende Ausbildung der Ausnehmungen 19, 20 denkbar. Die Ausnehmungen 19 des radial äußeren Außenrings 17 sind jeweils koaxial zu jeweils zumindest einer Ausnehmung 20 des radial inneren Innenrings 18 angeordnet. Die Lagerzapfen 13 sind jeweils in einer Ausnehmung 19 des radial äußeren Außenrings 17 und in einer Ausnehmung 20 des radial inneren Innenrings 18 radial gesichert angeordnet. Zur radialen Sicherung der Lagerzapfen 13 weisen die Lagerzapfen 13 jeweils einen Sicherungsring 43 auf, der den Lagerzapfen 13 radial an dem radial äußeren Außenring 17 abstützt. Die Sicherungsringe 43 sichern die Lagerzapfen 13 jeweils in radialer Richtung zu der Rotationsachse 28 des Antriebszahnrads 12 hin. Die Sicherungsringe 43 sind jeweils von Runddraht-Sprengringen gebildet. Die Sicherungsringe 43 sind jeweils in einer Ringnut 44 des jeweiligen Lagerzapfens 13 angeordnet (Figuren 4, 7).

Alternativ oder zusätzlich wäre auch denkbar, dass die Lagerzapfen 13 in den Radträger 15 eingepresst sind.

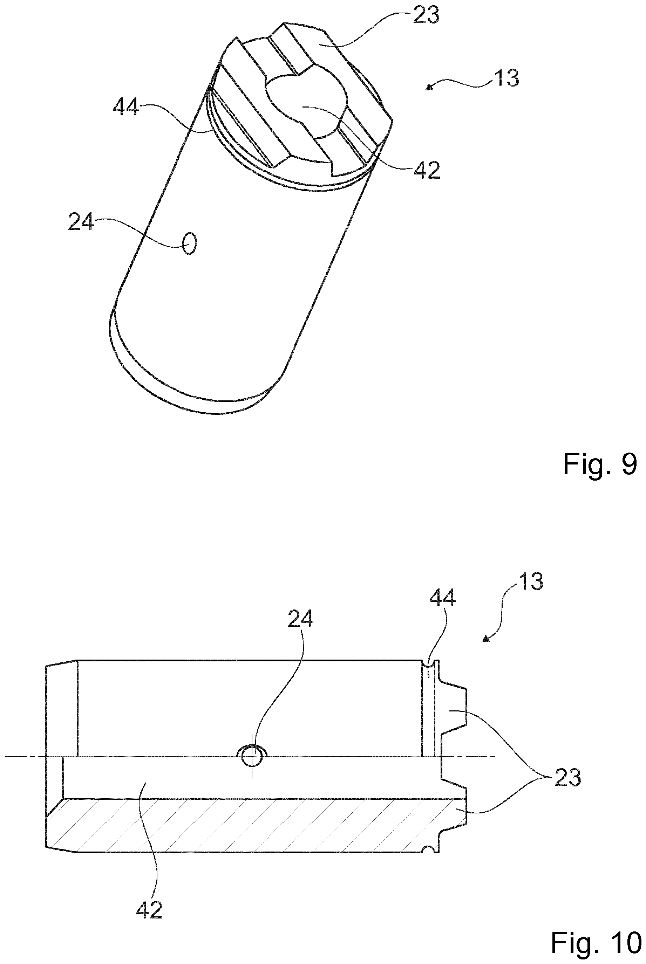

Ferner weisen die Lagerzapfen 13 auf jeweils einer Stirnseite eine Verzahnung 23 auf. Die Lagerzapfen 13 weisen an einer radial äußeren Stirnseite die Verzahnung 23 auf. Die Verzahnung 23 ist zu einer Verdrehsicherung der Lagerzapfen 13 vorgesehen. Die Verzahnung 23 der Lagerzapfen 13 ist in einem montierten Zustand in Eingriff mit der Innenverzahnung der Stützstelle 38 des ersten Trägerelements 36. Grundsätzlich wäre jedoch auch denkbar, dass die Verzahnung 23 der Lagerzapfen 13 in einem montierten Zustand direkt in Eingriff mit einer Innenverzahnung des Antriebszahnrads 12 steht. Die Verzahnung 23 der Lagerzapfen 13 entspricht, insbesondere hinsichtlich einer Zahngeometrie und einer Zahndimensionierung, annähernd der Außenverzahnung 16 des Radträgers 15 (Figur 9).

Des Weiteren weist der Steg 21 des Radträgers 15 mehrere Aussparungen 22 zu einer Aufnahme der Ausgleichszahnräder 14 auf. Eine Anzahl der Aussparungen 22 entspricht einer Anzahl der Ausgleichszahnräder 14. Grundsätzlich wäre jedoch auch denkbar, dass der Radträger 15 weitere Aussparungen zu einer Verbesserung des Leichtbaus aufweist. Zudem wäre auch denkbar, den Außenring 17 und/oder den Innenring 18 mit Fasen zu versehen. Die Aussparungen 22 sind jeweils von einem Fenster gebildet, welches sich in axialer Richtung vollständig durch den Radträger 15 erstreckt. Die Aussparungen 22 weisen in axialer Richtung einen konstanten Querschnitt auf. Die Aussparungen 22 weisen einen im Wesentlichen rechteckigen Querschnitt auf. Die Aussparungen 22 weisen beispielhaft einen rechteckigen Querschnitt mit den Maßen 12 mm auf 30 mm auf. Die Aussparung 22 kann dabei sowohl nachträglich in den Radträger 15 eingebracht werden als auch bereits bei einer Herstellung des Radträgers 15 ausgespart werden. Die Lagerzapfen 13 erstrecken sich jeweils in radialer Richtung durch jeweils eine Aussparung 22 und dienen dabei zu einer Lagerung der Ausgleichszahnräder 14. Die Rotationsachsen 34 der Ausgleichszahnräder 14 erstrecken sich ebenfalls in radialer Richtung durch jeweils eine Aussparung 22 (Figuren 6, 7, 8).

Die Rohteilherstellung des Radträgers 15 erfolgt durch Strangpressen, wobei die Außenverzahnung 16 hierbei vorteilhaft ebenfalls hergestellt wird. Alternativ wird die Außenverzahnung 16 durch Längswalzen hergestellt. Anschließend erfolgt ein Ablängen sowie eine spanende Bearbeitung, insbesondere mittels Drehen, vorteilhafterweise auf Stangenautomaten. Die Aussparungen 22 für die Ausgleichszahnräder 14 werden gefräst. Zum Reduzieren eines Zerspanvolumens bzw. zur separaten T6-Behandlung wird gegebenenfalls zusätzlich ein vorheriges axiales Umformen durchgeführt. Die Ausnehmungen 19, 20 werden mittels Bohren und Reiben hergestellt und bearbeitet. Anschließend wird der Radträger 15 gebürstet und gereinigt.

Bei einer Montage des Radträgers 15 wird in einem ersten Schritt der Sicherungsring 43 an den Lagerzapfen 13 montiert. Ferner werden die Anlaufscheiben montiert und die Ausgleichszahnräder 14 in dem Radträger 15 angeordnet. Anschließend werden in einem zweiten Schritt die Lagerzapfen 13 in den Radträger 15 eingepresst. Darauffolgend kann der zusammengebaute Radträger 15 in das Ausgleichszahnrad 14 bzw. in das erste Trägerelement 36 eingepresst werden.

Ein Wert eines Radius r₃ der Ausgleichszahnräder 14 beträgt zumindest 10% eines Werts des Radius r₂ des radial äußeren Außenrings 17. Der Wert des Radius r₃ der Ausgleichszahnräder 14 beträgt annähernd 16% eines Werts des Radius r₂ des radial äußeren Außenrings 17. Der Radius r₃ der Ausgleichszahnräder 14 beträgt annähernd 1/6 eines Werts des Radius r₂ des radial äußeren Außenrings 17.

### Bezugszeichenliste

- 10: Differentialgetriebe
- 11: Kraftfahrzeug
- 12: Antriebszahnrad
- 13: Lagerzapfen
- 14: Ausgleichszahnrad
- 15: Radträger
- 16: Außenverzahnung
- 17: Außenring
- 18: Innenring
- 19: Ausnehmung
- 20: Ausnehmung
- 21: Steg
- 22: Aussparung
- 23: Verzahnung
- 24: Beölungsbohrung
- 25: Antriebsrad
- 26: Antriebseinheit
- 27: Mehrstufengetriebe
- 28: Rotationsachse
- 29: Außenverzahnung
- 30: Abtriebszahnrad
- 31: Abtriebszahnrad
- 32: Abtriebsnabe
- 33: Abtriebsnabe
- 34: Rotationsachse
- 35: Antriebsradträger
- 36: Trägerelement
- 37: Trägerelement
- 38: Stützstelle
- 39: Stützstelle
- 40: Lagerstelle
- 41: Lagerstelle
- 42: Bohrung
- 43: Sicherungsring
- 44: Ringnut

## Patentansprüche

1. Differentialgetriebe für ein Kraftfahrzeug (11), mit einem hohlförmigen Antriebszahnrad (12), das zur Drehmomenteinleitung vorgesehen ist, mit zumindest einem an einem Innenumfang des Antriebszahnrads (12) angeordneten Lagerzapfen (13), mit zumindest einem auf dem Lagerzapfen (13) drehbar gelagerten Ausgleichszahnrad (14),
und mit einem Radträger (15), welcher eine Außenverzahnung (16) zu einer drehfesten Verbindung mit dem Antriebszahnrad (12) aufweist und zu einer Aufnahme des zumindest einen Lagerzapfens (13) und des zumindest einen Ausgleichszahnrads (14) vorgesehen ist,
**dadurch gekennzeichnet, dass**
der Radträger (15) einen radial äußeren Außenring (17) und einen zu dem Außenring (17) beabstandeten radial inneren Innenring (18) aufweist, wobei der radial äußere Außenring (17) und der radial innere Innenring (18) jeweils zumindest eine Ausnehmung (19, 20) zu einer Aufnahme des zumindest einen Lagerzapfens (13) aufweisen.

2. Differentialgetriebe zumindest nach Anspruch 1,
**dadurch gekennzeichnet, dass**
der zumindest eine Radträger (15) einen Steg (21) aufweist, welcher den radial äußeren Außenring (17) mit dem radial inneren Innenring (18) verbindet.

3. Differentialgetriebe nach Anspruch 2,
**dadurch gekennzeichnet, dass**
der Steg (21) des zumindest einen Radträgers (15) zumindest eine Aussparung (22) zu einer Aufnahme des zumindest einen Ausgleichszahnrads (14) aufweist.

4. Differentialgetriebe nach einem der vorhergehenden Ansprüche,
**dadurch gekennzeichnet, dass**
der zumindest eine Lagerzapfen (13) rohrförmig ausgebildet ist.

5. Differentialgetriebe nach einem der vorhergehenden Ansprüche,
**dadurch gekennzeichnet, dass**
der zumindest eine Lagerzapfen (13) auf zumindest einer Stirnseite eine Verzahnung (23) aufweist, welche zu einer Verdrehsicherung des zumindest einen Lagerzapfens (13) vorgesehen ist.

6. Differentialgetriebe nach einem der vorhergehenden Ansprüche,
**dadurch gekennzeichnet, dass**
der zumindest eine Lagerzapfen (13) zumindest eine sich in Bezug auf eine Rotationsachse 34 des zugehörigen Ausgleichszahnrads 14 radial erstreckende Beölungsbohrung (24) aufweist.

7. Differentialgetriebe nach einem der vorhergehenden Ansprüche, gekenzeichnet durch
Abtriebszahnräder (31, 31) welche als Kronenräder ausgebildet sind, und welche jeweils eine Verzahnung aufweisen, welche ständig in Eingriff mit einer Verzahnung des zumindest einen Ausgleichszahnrades (14) stehen.

8. Differentialgetriebe nach Anspruch 7,
**dadurch gekennzeichnet, dass**
ein maximaler Außendurchmesser des Ausgleichszahnrades (14) kleiner als 40 % eines maximalen Außendurchmessers der Abtriebszahnräder (30, 31) ist.

## Claims

1. Differential for a motor vehicle (11), with a hollow drive gear (12) provided for inducing torque, with at least one bearing journal (13) located at an inner circumference of the drive gear (12), with at least one differential pinion (14) rotatably mounted on the bearing journal (13),
and with a hub carrier (15) having an external toothing (16) for a non-rotatable connection to the drive gear (12) and provided for an accommodation of the at least one bearing journal (13) and the at least one differential pinion (14),
**characterised in that**
the hub carrier (15) has a radially outward-located outer ring (17) and a radially inward-located inner ring (18) spaced from the outer ring (17), the radially outward-located outer ring (17) and the radially inward-located inner ring (18) each having a recess (19, 20) for an accommodation of the at least one bearing journal (13).

2. Differential according to at least claim 1,
**characterised in that**
the at least one hub carrier (15) has a web (21) joining the radially outward-located outer ring (17) to the radially inward-located inner ring (18).

3. Differential according to claim 2,
**characterised in that**
the web (21) of the at least one hub carrier (15) has at least one recess (22) for an accommodation of the at least one differential pinion (14).

4. Differential according to any of the preceding claims,
**characterised in that**
the at least one bearing journal (13) is designed to be tubular.

5. Differential according to any of the preceding claims,
**characterised in that**
the at least one bearing journal (13) has a toothing (23) provided to secure the at least one bearing journal (13) against rotation on at least one end face.

6. Differential according to any of the preceding claims,
**characterised in that**
the at least one bearing journal (13) has at least one oiling bore (24) extending radially with respect to a rotational axis (34) of the associated differential pinion (14).

7. Differential according to any of the preceding claims,
**characterised by**
driven gears (30, 31), which are designed as crown wheels and each of which has a toothing in continuous engagement with a toothing of the at least one differential pinion (14).

8. Differential according to claim 7,
**characterised in that**
a maximum outer diameter of the differential pinion (14) is less than 40% of a maximum outer diameter of the driven gears (30, 31).

## Revendications

1. Différentiel pour un véhicule à moteur (11) comprenant un pignon d'attaque (12) qui sert à introduire le couple de rotation, comprenant au moins un tourillon disposé sur une périphérie intérieure du pignon d'attaque (12), comprenant au moins un pignon de compensation (14) monté en rotation sur le tourillon (13)
et comprenant un support de roue (15) qui présente une denture extérieure (16) qui sert à accoupler solidaire en rotation le pignon d'attaque (12) et à loger ledit tourillon (13) et ledit pignon de compensation (14),
**caractérisé en ce que** le support de roue (15) présente une bague externe radialement extérieure (17) et une bague intérieure (18) radialement intérieure éloignée de la bague externe (17), la bague externe radialement extérieure (17) et la bague interne radialement intérieure (18) présente respectivement au moins un évidement (19, 20) pour loger ledit tourillon (13).

2. Différentiel au moins selon la revendication 1, **caractérisé en ce que** ledit support de roue (15) présente un élément jointif (21) qui relie la bague externe radialement extérieure (17) à la bague interne (18) radialement intérieure.

3. Différentiel selon la revendication 2, **caractérisé en ce que** l'élément jointif (21) dudit support de roue (15) présente au moins un évidement (22) pour loger ledit pignon de compensation (14).

4. Différentiel selon l'une quelconque des revendications précédentes, **caractérisée en ce que** ledit tourillon (13) se présente sous la forme d'un tube.

5. Différentiel selon l'une quelconque des revendications précédentes, **caractérisé en ce que** ledit tourillon (13) présente au moins sur une face avant une denture (23) qui sert de sécurité anti-rotation dudit tourillon (13).

6. Différentiel selon l'une quelconque des revendications précédentes, **caractérisé en ce que** ledit tourillon (13) présente au moins un alésage de lubrification (24) qui s'étend radialement par rapport à un axe de rotation (34) du pignon de compensation associé (14).

7. Différentiel selon l'une quelconque des revendications précédentes, **caractérisé par** des pignons entraînés (31, 31) qui forment une couronne de différentiel et qui présente chacun une denture, et qui sont en prise continue avec la denture dudit pignon de compensation (14).

8. Différentiel selon la revendication 7, **caractérisé en ce qu'**un diamètre extérieur maximal est inférieur, à hauteur de 40 %, d'un diamètre extérieur maximal des pignons entraînés (30, 31).
